# EUROPEAN PATENT APPLICATION

(11) **EP 1 643 355 A2**
(43) Date of publication of application: **05.04.2006**
(21) Application number: 05108747.6
(22) Date of filing: 22.09.2005
(51) Int. Cl.: G06F 3/12

(54) **Device monitor system, network connection apparatus, and device monitor method**

(30) Priority: 30.09.2004 JP 2004287176
(71) Applicant: SEIKO EPSON CORPORATION, Shinjuku-ku, Tokyo 163-0811 (JP)
(72) Inventor: Abe, Takuya, c/o Seiko Epson Corporation, Suwa-shi, Nagano-ken, Nagano 392-8502 (JP); Shima, Toshihiro, c/o Seiko Epson Corporation, Suwa-shi, Nagano-ken, Nagano 392-8502 (JP); Yoshino, Atsushi, c/o Seiko Epson Corporation, Suwa-shi, Nagano-ken, Nagano 392-8502 (JP); Matsumoto, Akira, c/o Seiko Epson Corporation, Suwa-shi, Nagano-ken, Nagano 392-8502 (JP)
(74) Representative: Winter, Brandl, Fürniss, Hübner Röss, Kaiser, Polte Partnerschaft Patent- und Rechtsanwaltskanzlei

(57) **Abstract**

A network connection apparatus of the invention has a list that includes at least device identification information used to identify a device as a monitor object device to be monitored by a monitor server. When the network connection apparatus is attached to the device, the network connection apparatus acquires the device's identification information from the device and determines whether the device is the monitor object device to be monitored by the monitor server, based on the acquired identification information and the list. In response to a negative result of the determination showing that the device is not the monitor object device, the network connection apparatus prevents transmission of the monitor information stored in the device to the monitor server via the network.

## Description

### BACKGROUND OF THE INVENTION

### 1. Field of the Invention

The present invention relates to a device monitor system, where a network connection apparatus attached to a device acquires monitor information from the device and sends the acquired monitor information to a monitor server, and the monitor server monitors the device based on the received monitor information. Specifically the invention pertains to a technique of, in the event of inadequate attachment of the network connection apparatus to a wrong device different from a proper monitor object device, preventing monitor of the wrong device.

### 2. Description of the Related Art

In a printing system widely used with the recent advance of networks including local area networks (LAN) and the Internet, printing devices are connected to a network and receive print job data sent via the network to implement printing operations.
Various monitor systems have been proposed to monitor the printing devices via the network.

One proposed monitor system includes a printing device and a monitor server connected to the printing device via a network. A network board is detachably attached to the printing device and functions as a network connection apparatus to make a network connection.
In this proposed monitor system, the network board attached to the printing device acquires information as monitor subject (hereafter referred to as 'monitor information'), for example, the remaining amount of toner and the occurrence of a paper jam error or any other error, from the printing device, and sends the acquired monitor information to the monitor server via the network. The monitor server accumulates the monitor information received from the network board and monitors the printing device based on the accumulated monitor information.

In a prior art monitor system disclosed in Japanese Patent Laid-Open Gazette No. 2002-259107, a monitor server monitors printers connected to the monitor server via a network.

This monitor system provides the printing device monitor services. For example, the user makes a monitor service contract, which specifies printing devices as monitor objects to be monitored by the monitor server. The monitor server receives and stores monitor information sent via the network from a network board attached to each monitor object printing device. The monitor system provides the user with the printing device monitor services, based on the monitor information stored in the monitor server, for example, prompt notification of the occurrence of an error and delivery of a replacement toner in the event of little remaining amount of toner.

The network board is readily detachable from the printing device. This characteristic allows a malicious user to detach the network board from the printing device as the monitor object specified in the monitor service contract and to attach the network device to a wrong printing device different from the monitor object printing device. In such cases, the monitor server stores the monitor information on the wrong device different from the monitor object printing device and monitors the wrong device based on the stored monitor information.

This problem is not characteristic of the monitor system of monitoring the printing devices, but also arises in various device monitor systems that monitor diversity of devices with the network boards.

### SUMMARY OF THE INVENTION

In order to solve the problem of the prior art, the technique of the invention is applied to a device monitor system, where a network connection apparatus attached to a device acquires monitor information from the device and sends the acquired monitor information to a monitor server, and the monitor server monitors the device based on the received monitor information. The technique of the invention aims to, in the event of inadequate attachment of the network connection apparatus to a wrong device different from a proper monitor object device, prevent monitor of the wrong device.

In order to attain at least part of the above and the other related objects, the present invention is directed to a device monitor system, which includes: a device; a monitor server that monitors the device, based on monitor information stored in the device; and a network connection apparatus that, when being attached to the device, sends the monitor information stored in the device as monitor subject information to the monitor server via a network.
The network connection apparatus has a list that includes at least device identification information used to identify the device as a monitor object device to be monitored by the monitor server. When the network connection apparatus is attached to the device, the network connection apparatus acquires the device's identification information from the device and determines whether the device is the monitor object device to be monitored by the monitor server, based on the acquired identification information and the list. In response to a negative result of the determination showing that the device is not the monitor object device, the network connection apparatus prevents transmission of the monitor information stored in the device to the monitor server via the network.

In the device monitor system of the invention, the network connection apparatus has the list that includes at least the device identification information used to identify the device as the monitor object device to be monitored by the monitor server. The network connection apparatus attached to the device determines whether the device is the monitor object device to be monitored by the monitor server, based on the list and the device's identification information acquired from the device.
When it is determined that the device is not the monitor object device to be monitored by the monitor server, the network connection apparatus does not send the monitor information stored in the device to the monitor server. The monitor server does not start monitoring the non-monitor object device, in the case of attachment of the network connection apparatus to the non-monitor object device.

In the device monitor system of the invention, the device may be, for example, a printing device.

The invention is also directed to a network connection apparatus that, when being attached to a device, sends monitor information stored in the device as monitor subject information via a network to a monitor server, which monitors the device based on the received monitor information.
The network connection apparatus has a list that includes at least device identification information used to identify the device as a monitor object device to be monitored by the monitor server. When the network connection apparatus is attached to the device, the network connection apparatus acquires the device's identification information from the device and determines whether the device is the monitor object device to be monitored by the monitor server, based on the acquired identification information and the list. In response to a negative result of the determination showing that the device is not the monitor object device, the network connection apparatus prevents transmission of the monitor information stored in the device to the monitor server via the network.

The network connection apparatus of the invention has the list that includes at least the device identification information used to identify the device as the monitor object device to be monitored by the monitor server. The network connection apparatus attached to the device determines whether the device is the monitor object device to be monitored by the monitor server, based on the list and the device's identification information acquired from the device.
When it is determined that the device is not the monitor object device to be monitored by the monitor server, the network connection apparatus does not send the monitor information stored in the device to the monitor server. The monitor server does not start monitoring the non-monitor object device, in the case of attachment of the network connection apparatus to the non-monitor object device.

The technique of the invention is not restricted to the device monitor system or the network connection apparatus described above, but may be actualized by a corresponding device monitor method. There are diversity of other applications of the invention, for example, computer programs that are used to attain the functions of the device monitor system, the network connection apparatus, and the corresponding device monitor method, recording media in which such computer programs are recorded, and data signals that include such computer programs and are embodied in carrier waves.

In the applications of the invention as the computer programs and the recording media in which the computer programs are recorded, the invention may be given as a whole program to control the device monitor system or the network connection apparatus or as a partial program to exert only the characteristic functions of the invention. Available examples of the recording media include ROM cartridges, punched cards, prints with barcodes or other codes printed thereon, internal storage devices (memories like RAMs and ROMs) and external storage devices of the computer, and diversity of other computer readable media.

### BRIEF DESCRIPTION OF THE DRAWINGS

Fig. 1 schematically illustrates the configuration of a device monitor system in one embodiment of the invention;
Fig. 2 schematically illustrates the structure of a printer PRT1 included in the device monitor system of the embodiment;
Fig. 3 shows information recorded in a monitor setting file 102a stored in a custom board network CNB of the printer PRT1;
Fig. 4 schematically illustrates the structure of a monitor server SV included in the device monitor system of the embodiment;
Fig. 5 is a flowchart showing a monitor information transmission routine executed in the device monitor system of the embodiment; and
Fig. 6 shows a monitor information table stored in a hard disk 202 of the monitor server SV.

### DESCRIPTION OF THE PREFERRED EMBODIMENTS

One mode of carrying out the invention is described below as a preferred embodiment in the following sequence.

### A. Embodiment

### A1. System Configuration

### A2. Detailed Processing for Device Monitor

### A3. Effects of Embodiment

### B. Modifications

### A. Embodiment

### A1. System Configuration

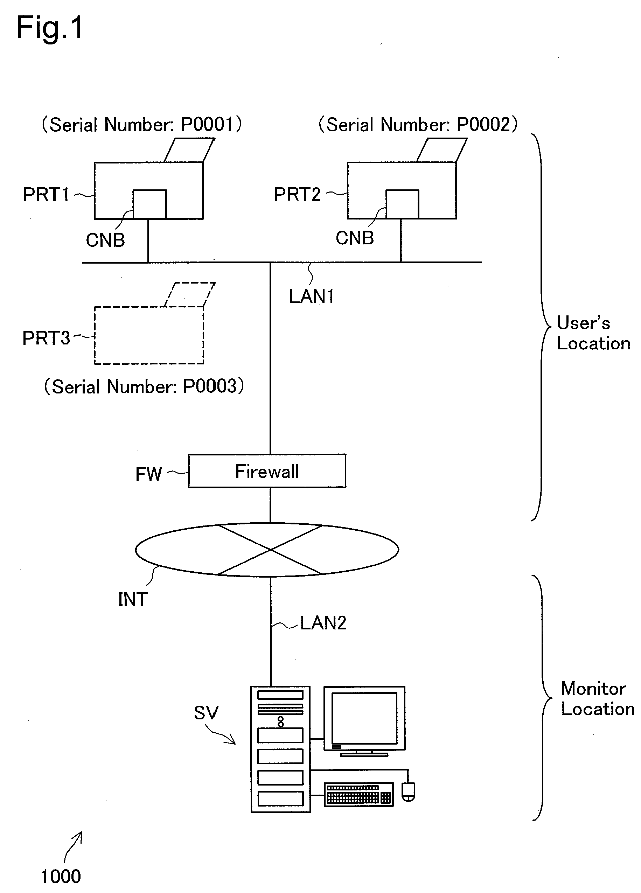

Fig. 1 schematically illustrates the configuration of a device monitor system 1000 in one embodiment of the invention.
The device monitor system 1000 of the embodiment includes printers PRT1 and PRT2 placed in a user's location and a monitor server SV installed in a monitor location of a monitor service provider. The monitor server SV and the respective printers PRT1 and PRT2 are interconnected via a network. The printers PRT1 and PRT2 are connected to a local area network LAN1, which is linked to the Internet INT via a firewall FW. The monitor server SV is connected to a local area network LAN2, which is linked to the Internet INT.

The printers PRT1 and PRT2 respectively have custom network boards CNB and are connected to the local area network LAN1 via the corresponding custom network boards CNB.
Serial numbers are allocated to the respective printers PRT1 and PRT2 for the purpose of identification. The serial numbers allocated to the printers PRT1 and PRT2 are 'P0001' and 'P0002' in this illustrated example.

The firewall FW is set to reject connection requests received via the Internet INT, in order to prevent illegal accesses via the Internet INT to the respective devices connected to the local area network LAN1.
In the device monitor system 1000, the printers PRT1 and PRT2 respectively send connection requests to the monitor server SV to establish connections with the monitor server SV and send monitor information to the monitor server SV The monitor server SV stores the received monitor information and monitors the printers PRT1 and PRT2 based on the stored monitor information.

A printer PRT3 having a serial number 'P0003' shown by the broken line in Fig. 1 is not a monitor object device as described later.

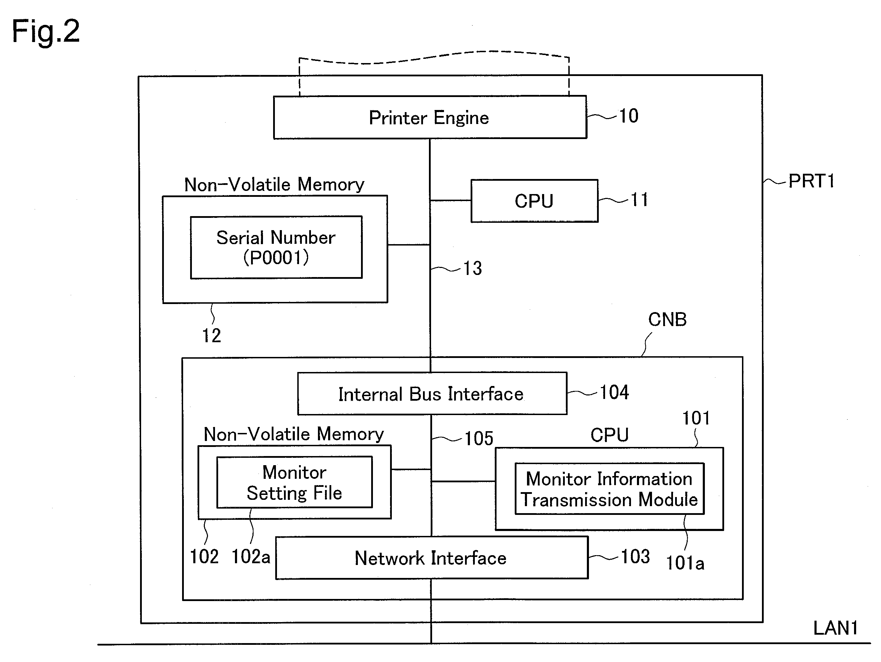

Fig. 2 schematically illustrates the structure of the printer PRT1 included in the device monitor system 1000 of the embodiment. The printers PRT1 and PRT2 have identical structures, and the following description regarding the printer PRT1 is thus similarly applicable to the printer PRT2.
The printer PRT1 mainly includes a printer engine 10, a CPU 11, a non-volatile memory 12, and a freely attachable and detachable custom network board CNB, which are interconnected via an internal bus 13. The printer engine 10 has a photosensitive drum (not shown) and diversity of other hardware elements to print images on paper. The allocated serial number 'P0001' is stored in the non-volatile memory 12.

The custom network board CNB mainly includes a CPU 101, a non-volatile memory 102, a network interface 103, and an internal bus interface 104, which are interconnected via an interval bus 105. The internal bus interface 104 functions to connect the internal bus 13 of the printer PRT1 with the internal bus 105 of the custom network board CNB. The network interface 103 functions to connect the custom board network CNB to the local area network LAN1.
The custom network board CNB is equivalent to the network connection apparatus of the invention.

A monitor agent program is stored in the non-volatile memory 102 of the custom network board CNB. The CPU 101 reads out and executes the monitor agent program stored in the non-volatile memory 102 to function as a monitor information transmission module 101a.

The non-volatile memory 102 of the custom network board CNB stores a monitor setting file 102a, in addition to the monitor agent program.
The monitor setting file 102a records required pieces of information for transmission of monitor information from the printer PRT1 to the monitor server SV The monitor setting file 102a is written into the non-volatile memory 102, for example, by operation of a personal computer at the time of installation of the printer PRT1 in the user's location after conclusion of a monitor service contract.

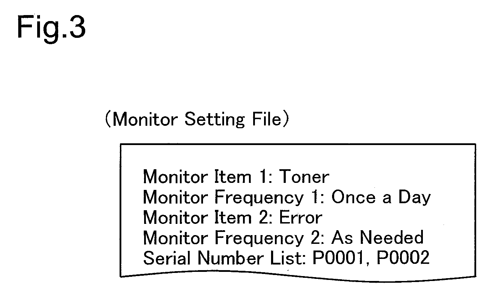

Fig. 3 shows information recorded in the monitor setting file 102a stored in the non-volatile memory 102 of the custom network board CNB.
The monitor setting file 102a includes monitor subjects, monitor frequencies, and a serial number list as preset items and detailed settings of these preset items.
The preset items and the detailed settings of the preset items are specified by the monitor service contract.

The 'monitor items' and the 'monitor frequencies' specify the items to be sent to the monitor server SV as monitor information and the frequencies of transmission of the respective items as the monitor information.
In the illustrated example of Fig. 3, the monitor service contract specifies:
(1) to send the remaining amount of toner to the monitor server SV once a day; and
(2) to send information on the occurrence of an error (when and what error arises) to the monitor server SV every time the error arises.
In this example, 'toner' and 'once a day' are set as monitor item 1 and monitor frequency 1, and 'error' and 'as needed' are set as monitor item 2 and monitor frequency 2.

The serial number list includes serial numbers allocated to the monitor object printers to be monitored by the monitor server SV In the illustrated example of Fig. 3, the monitor service contract specifies the printers PRT1 and PRT2 as the monitor object printers. The serial number list accordingly includes the two serial numbers 'P0001' and 'P0002' allocated to the printers PRT1 and PRT2.

The monitor setting file 102a also includes network-related information (not shown) required for data transmission between the printer PRT1 and the monitor server SV, for example, URL (Uniform Resource Locator) of the monitor server SV, as well as the monitor items, the monitor frequencies, and the serial number list described above.

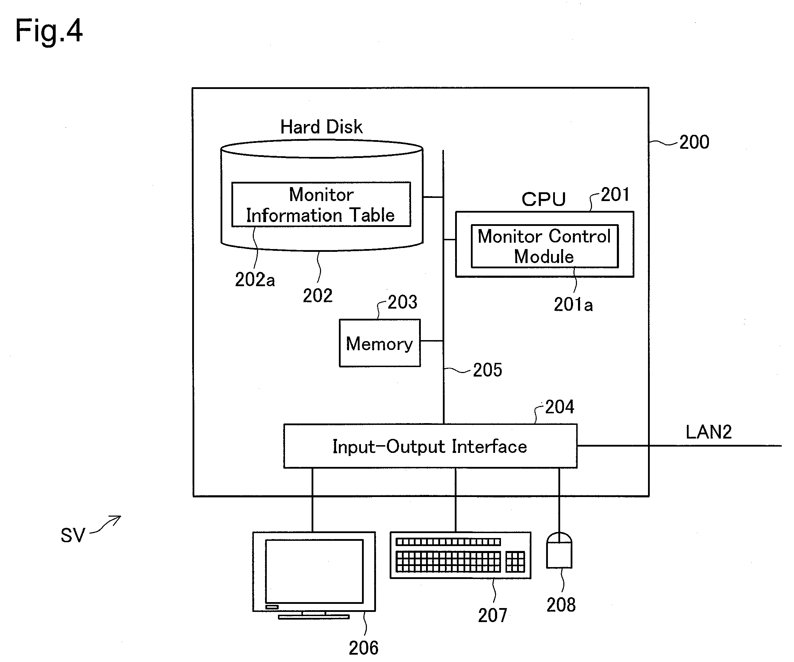

Fig. 4 schematically illustrates the structure of the monitor server SV included in the device monitor system 1000 of the embodiment.
The monitor server SV is constructed by a computer 200 and mainly includes a CPU 201, a hard disk 202, a memory 203, and an input-output interface 204, which are interconnected via an internal bus 205. The monitor server SV also includes a keyboard 207 and a mouse 208 as data input devices and a display 206 as an image output device. The input-output interface 204 connects the keyboard 207, the mouse 208, the display 206, and the local area network LAN2 with the CPU 201 and the other internal components via the internal bus 205.

The monitor server SV executes a printer monitoring application program under control of an installed operating system. Required corresponding drivers are incorporated in the operating system to control the operations of the keyboard 207, the mouse 208, and the display 206. The CPU 201 executes the application program activated and loaded into the memory 203 to function as a monitor control module 201a.
A monitor information table 202a is stored in the hard disk 202. The pieces of the monitor information sent from the printers PRT1 and PRT2 are additionally written in the monitor information table 202a stored in the hard disk 202.

### A2. Detailed Processing for Device Monitor

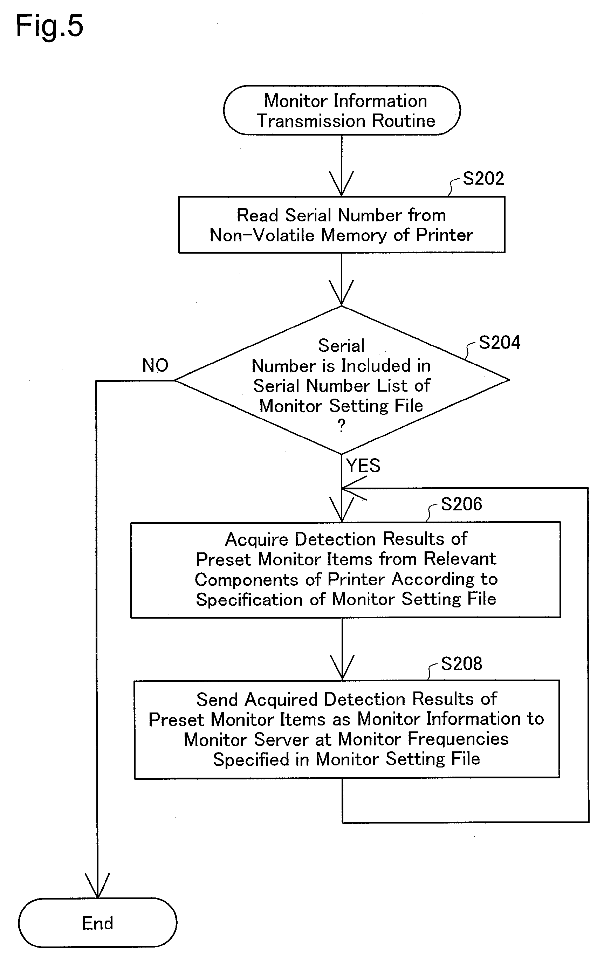

Fig. 5 is a flowchart showing a monitor information transmission routine executed in the device monitor system 1000 of the embodiment.
In response to the user's power-on operation of the printer PRT1, the monitor information transmission routine of Fig. 5 is activated in the printer PRT1. The monitor information transmission module 101a (see Fig. 2) first reads the serial number allocated to the printer PRT1 and stored in the non-volatile memory 12 of the printer PRT1 (step S202).

The monitor information transmission module 101a then reads the monitor setting file 102a from the non-volatile memory 102 of the custom network board CNB and determines whether the serial number read from the non-volatile memory 12 of the printer PRT1 is included in the serial number list of the monitor setting file 102a (step S204).

When the serial number is included in the serial number list of the monitor setting file 102a, the monitor information transmission module 101 a acquires the detection results of the specified monitor items from the relevant components of the printer PRT1 according to the specification of the monitor setting file 102a and stores the acquired detection results of the monitor items into the non-volatile memory 102 of the custom network board CNB (step S206).

In the illustrated example of Fig. 3, the serial number 'P0001' of the printer PRT 1 is included in the serial number list of the monitor setting file 102a. The monitor information transmission module 101 a thus acquires the remaining amount of toner from the printer engine 10 (see Fig. 2) once a day according to the specification of the monitor setting file 102a and stores the acquired remaining amount of toner into the non-volatile memory 102 of the custom network board CNB.

The monitor information transmission module 101a sends a connection request to the monitor server SV at the monitor frequencies specified in the monitor setting file 102a to establish a connection between the printer PRT1 and the monitor server SV, and sends the detection results of the monitor items stored in the non-volatile memory 102 as the monitor information to the monitor server SV (step S208).
In the illustrated example of Fig. 3, the monitor information transmission module 101 a sends the detected remaining amount of toner as the monitor information to the monitor server SV once a day. The information on the occurrence of an error is stored in the non-volatile memory 102 and is sent as the monitor information every time the error arises.

The monitor information transmission module 101a repeatedly acquires the detection results of the monitor items and the transmission of the monitor information to the monitor server SV according to the specification of the monitor setting file 102a at the specified monitor frequency.

In the monitor server SV (see Fig. 4), the monitor control module 201a additionally writes the received monitor information into the monitor information table 202a stored in the hard disk 202.

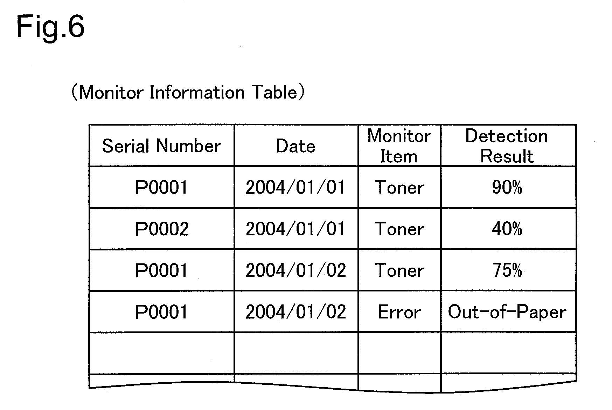

Fig. 6 shows the monitor information table 202a stored in the hard disk 202 of the monitor server SV.
Each row of the monitor information table 202a shown in Fig. 6 represents each piece of the monitor information received from either the printer PRT1 or the printer PRT2. The monitor information in the lower-most row represents an 'out-of-paper' error arising in the printer PRT1 having the allocated serial number'P0001'.
The monitor control module 201a monitors the printers PRT1 and PRT2, based on the monitor information table 202a. The monitor control module 201a shows the monitor information on the display 206 (see Fig. 4), while informing the monitor operator or the user of the occurrence of an error.

In the example described above, the custom network board CNB is attached to the printer PRT1 as the monitor object printer.

The following description regards the device control process when the user detaches the custom network board CNB from the printer PRT1 and attaches the customer network board CNB to the printer PRT3 having the allocated serial number 'P0003' (shown by the broken line in Fig. 1), which is not the monitor object printer, while the monitor server SV monitors the printers PRT1 and PRT2. The printer PRT3 has the identical structure with that of the printer PRT1 and is not specifically described here.

The user connects the printer PRT3 to the local area network LAN1 via the custom network board CNB attached to the printer PRT3 and powers on the printer PRT3.

In response to the user's power-on operation, the monitor information transmission process of Fig. 5 starts on the printer PRT3.
The monitor information transmission module 101 a (see Fig. 2) first reads the serial number 'P0003' allocated to the printer PRT3 and stored in a non-volatile memory of the printer PRT3 (step S202).
The monitor information transmission module 101 a then reads the monitor setting file 102a from the non-volatile memory 102 of the custom network board CNB and determines whether the serial number read from the non-volatile memory of the printer PRT3 is included in the serial number list of the monitor setting file 102a (step S204).

The serial number list of the monitor setting file 102a includes the serial numbers 'P0001' and 'P0002' allocated to the printers PRT1 and PRT2 as the monitor object printers. The serial number list, however, does not include the serial number 'P0003' allocated to the printer PRT3, which is not the monitor object printer.
The monitor information transmission module 101 a thus determines that the serial number 'P0003' of the printer PRT3 is not included in the serial number list of the monitor setting file 102a at step S204.
The monitor information transmission routine is terminated here.

Termination of the monitor information transmission module prevents transmission of the monitor information of the printer PRT3 to the monitor server SV. The monitor server SV accordingly does not start monitoring the printer PRT3, which is not the monitor object printer.

### A3. Effects of Embodiment

As described above, the list of the serial numbers allocated to the monitor object printers to be monitored by the monitor server SV is stored in advance as the monitor setting file 102a in the non-volatile memory 102 of the custom network board CNB. The monitor information transmission module 101a of the custom network board CNB reads the serial number from the non-volatile memory of the printer with the attached custom network board CNB and determines whether the serial number is included in the serial number list stored in the custom network board CNB. This determines whether the printer is the monitor object printer to be monitored by the monitor server SV
The monitor information transmission routine is terminated, in response to a determination result that the printer with the attached custom network board CNB is not the monitor object printer to be monitored by the monitor server SV The monitor server SV accordingly does not receive the monitor information regarding the non-monitor object printer and thereby not start monitoring the non-monitor object printer.

B. Modifications
The embodiment and its application discussed above are to be considered in all aspects as illustrative and not restrictive. There may be many modifications, changes, and alterations without departing from the scope or spirit of the main characteristics of the present invention. Some examples of possible modification are given below.

### B1. Modified Example 1

The device monitor control of the embodiment terminates the monitor information transmission routine to prevent transmission of the monitor information to the monitor server SV, when the serial number of the printer with the attached custom network board CNB is not included in the serial number list of the monitor setting file 102a. One possible modification of the device monitor control may interfere with transmission of a connection request to the monitor server SV to prevent transmission of the detection results of the preset monitor items as the monitor information to the monitor server SV.
According to this modified device monitor control, the monitor server SV does not receive the monitor information regarding the non-monitor object printer and thereby not start monitoring the non-monitor object printer.

### B2. Modified Example 2

In the embodiment described above, the serial number list of the monitor setting file 102a includes the serial numbers allocated to the monitor object printers to be monitored by the monitor server SV. A serial number list of a modified monitor setting file may, on the contrary, include the serial numbers allocated to the non-monitor object printers.
The modified device monitor control terminates the monitor information transmission routine when the serial number allocated to the printer with the attached custom network board CNB is included in the serial number list of the modified monitor setting file. When the serial number allocated to the printer with the attached custom network board CNB is not included in the serial number list of the modified monitor setting file, on the other hand, the modified device monitor control acquires the detection results of the preset monitor items from the relevant components of the printer and sends the acquired detection results of the preset monitor items as the monitor information to the monitor server SV.
According to this modified device monitor control, the monitor server SV does not receive the monitor information regarding the non-monitor object printer and thereby not start monitoring the non-monitor object printer.

### B3. Modified Example 3

In the embodiment described above, the serial number stored in the non-volatile memory of each printer is used as the printer identification information. The printer identification information is, however, not restricted to the serial number of the printer but may be any piece of information that enables identification of each printer, for example, an IP (Internet Protocol) address set in each printer and stored in a non-volatile memory of the printer.

### B4. Modified Example 4

In the embodiment described above, each of the printers PRT1 and PRT2 sends a connection request to the monitor server SV to establish a connection between the printer PRT1 or PRT2 and the monitor server SV and sends the monitor information to the monitor server SV In one modified arrangement, the monitor server SV may send a connection request to each of the printers PRT1 and PRT2 at a preset monitor frequency to establish a connection between the monitor server SV and the printer PRT1 or PRT2 and inquires the printer PRT1 or the printer PRT2 about the monitor information. The printer PRT1 or the printer PRT2 sends the monitor information stored in the non-volatile memory to the monitor server SV, in response to the inquiry from the monitor server SV
In this modified arrangement, the firewall FW is set to accept the connection requests received via the Internet INT, in order to allow accesses via the Internet INT to the respective devices connected to the local area network LAN1.

All changes within the meaning and range of equivalency of the claims are intended to be embraced therein. The scope and spirit of the present invention are indicated by the appended claims, rather than by the foregoing description.
Finally, the present application claims the priority based on Japanese Patent Application No. 2004-321483 filed on Nov. 11, 2004, which is herein incorporated by reference.

## Claims

1. A device monitor system, comprising:
a device;
a monitor server that monitors the device, based on monitor information stored in the device; and
a network connection apparatus that, when being attached to the device, sends the monitor information stored in the device as monitor subject information to the monitor server via a network,
the network connection apparatus having a list that includes at least device identification information used to identify the device as a monitor object device to be monitored by the monitor server,
when the network connection apparatus is attached to the device, the network connection apparatus acquiring the device's identification information from the device, determining whether the device is the monitor object device to be monitored by the monitor server, based on the acquired identification information and the list, and in response to a negative result of the determination showing that the device is not the monitor object device, preventing transmission of the monitor information stored in the device to the monitor server via the network.

2. A device monitor system in accordance with claim 1, wherein the device is a printing device.

3. A network connection apparatus that, when being attached to a device, sends monitor information stored in the device as monitor subject information via a network to a monitor server, which monitors the device based on the received monitor information,
the network connection apparatus having a list that includes at least device identification information used to identify the device as a monitor object device to be monitored by the monitor server,
when the network connection apparatus is attached to the device, the network connection apparatus acquiring the device's identification information from the device, determining whether the device is the monitor object device to be monitored by the monitor server, based on the acquired identification information and the list, and in response to a negative result of the determination showing that the device is not the monitor object device, preventing transmission of the monitor information stored in the device to the monitor server via the network.

4. A device monitor method that monitors a device using a monitor server, which monitors the device based on monitor information stored in the device as monitor subject information, and a network connection apparatus that, when being attached to the device, sends the monitor information stored in the device to the monitor server via a network, the device monitor method comprising the steps of:
(a) providing a list that includes at least device identification information used to identify the device as a monitor object device to be monitored by the monitor server, in the network connection apparatus;
(b) attaching the network connection apparatus to the device;
(c) causing the network connection apparatus to acquire the device's identification information from the device;
(d) causing the network connection apparatus to determine whether the device is the monitor object device to be monitored by the monitor server, based on the acquired identification information and the provided list; and
(e) causing the network connection apparatus to, in response to an affirmative result of the determination in the step (d) showing that the device is the monitor object device, send the monitor information stored in the device to the monitor server via the network, and
in response to a negative result of the determination in the step (d) showing that the device is not the monitor object device, to prevent transmission of the monitor information stored in the device to the monitor server via the network.

5. A computer program product that causes a computer to send monitor information stored in a device as monitor subject information via a network to a monitor server, which monitors the device based on the received monitor information,
the computer program product comprising:
a first program code that causes the computer to acquire the device's identification information from the device;
a second program code that causes the computer to determine whether the device is a monitor object device to be monitored by the monitor server, based on the acquired identification information and a list that includes at least device identification information used to identify the device as the monitor object device to be monitored by the monitor server;
a third program code that causes the computer to, in response to an affirmative result of the determination showing that the device is the monitor object device, send the monitor information stored in the device to the monitor server via the network, and
in response to a negative result of the determination showing that the device is not the monitor object device, to prevent transmission of the monitor information stored in the device to the monitor server via the network; and
a computer readable medium that stores the first to third program codes.
